# EUROPÄISCHE PATENTANMELDUNG

(11) **EP 4 293 242 A1**
(43) Veröffentlichungstag der Anmeldung: **20.12.2023**
(21) Anmeldenummer: 23020277.2
(22) Anmeldetag: 05.06.2023
(51) Int. Cl.: F16B 13/12

(54) **RAHMENDÜBEL**

(30) Priorität: 14.06.2022 AT 1282022
(71) Anmelder: SIHGA GmbH, 4694 Ohlsdorf (AT)
(72) Erfinder: Kaiser-Mühlecker, Benedikt, 4531 Kematen an der Krems (AT); Schauer, Robert, 4655 Vorchdorf (AT)

(57) **Zusammenfassung**

Die Erfindung betrifft einen Rahmendübel (1), welcher aus thermoplastischem Kunststoff besteht, und auf einer Achse hintereinander liegend einen Verankerungsabschnitt (2), einen Hülsenabschnitt (3) und einen Bund (4) aufweist, welche gemeinsam einen länglichen Hohlraum (5) umfassen. Sowohl der Bund (4) als auch ein an den Bund (4) angrenzender Längsbereich (6) des Hülsenabschnittes (3) weisen eine geringere Wandstärke auf, als der an den Längsbereich (6) vom Bund (4) abgewandt folgende Längsbereich des Hülsenabschnittes (3).

## Beschreibung

Die Erfindung betrifft einen Rahmendübel welcher aus thermoplastischem Kunststoff besteht.

Ein Dübel im Sinne dieses Dokumentes ist ein längliches Element, welches bei bestimmungsgemäßer Anwendung zumindest mit einem Teil seiner Länge in ein Bohrloch eingesetzt ist, und einen in seiner Längsrichtung verlaufenden Hohlraum aufweist, in welchem koaxial zum Hohlraum eine mit einem Teil des Dübels in Gewindeeingriff befindliche Schraube verläuft. Dübel werden dann eingesetzt, wenn eine Schraube in ein Material - typischerweise mineralisches Mauerwerk - eingeschraubt werden soll, in welchem kein ausreichend belastbares Mutterngewinde für die Schraube gebildet werden kann.

Ein Rahmendübel im Sinne dieses Dokumentes ist ein Dübel, welcher sich nicht nur in das Bohrloch in jenem Material, in welchem kein belastbares Gewinde anzubringen ist, erstreckt, sondern auch durch jenen Teil hindurch, der an dem besagten Material mittels der bestimmungsgemäß im Dübel verlaufenden Schraube zu befestigen ist. (Der Begriff "Rahmendübel" ist vermutlich durch die häufige Anwendung zur Befestigung von Fenster- und Türrahmen an Mauerwerk entstanden.)

Die DE 1400931 A1 zeigt einen Dübel welcher an seinem vom Verankerungsabschnitt abgewandt liegenden Ende einen Bund, also eine ringartige Verbreiterung aufweist. Der Dübel ist allerdings kein Rahmendübel, sondern einen Dübel, welcher bestimmungsgemäß bis zum Anschlag am Bund in ein Bohrloch im Mauerwerk einzustecken ist, und sich bestimmungsgemäß nicht durch eine Bohrung in dem am Mauerwerk zu befestigenden Teil hindurch erstreckt.

Thermoplastischer Kunststoff, ist als Material für Dübel vorteilhaft, weil dieses Material im Allgemeinen passend weich und weit verformbar ist, und weil die Dübel damit durch Kunststoff-Spritzgießen vergleichsweise kostengünstig in hohen Stückzahlen herstellbar sind.

Gattungsgemäße Rahmendübel zeigen beispielsweise die Schriften DE 8321395 U1, EP 0150668 B1, GB 2118660 A, und GB 2147967 B. Diese Rahmendübel weisen auf gerader Linie hintereinander liegend jeweils einen Verankerungsabschnitt, einen Hülsenabschnitt und einen Bund auf. Am Beispiel Befestigung an Mauerwerk erstreckt sich in bestimmungsgemäß montiertem Zustand der Verankerungsabschnitt in eine Bohrung im Mauerwerk; der Hülsenabschnitt verläuft durch eine Bohrung in dem am Mauerwerk zu befestigenden Gegenstand hindurch, und der Bund befindet sich im Bereich der sichtbaren Oberfläche des zu befestigenden Gegenstandes. Der Bund schließt an dem vom Verankerungsabschnitt abgewandten Ende an den Hülsenabschnitt an, und stellt gegenüber diesem eine koaxial dazu angeordnete ringförmige Verbreiterung dar.

Bei der bestimmungsgemäßen Montage des zu befestigenden Gegenstandes am Mauerwerk wird der Gegenstand in passender Relativposition zu diesem an das Mauerwerk angelegt, dann wird eine Bohrung durch den Gegenstand hindurch und in das Mauerwerk hinein gebohrt, dann wird der Rahmendübel in die Bohrung gesteckt, sodass er durch den Gegenstand hindurch und in das Mauerwerk hinein verläuft. Schließlich wird eine Schraube - die typischerweise ein selbstschneidendes Gewinde aufweist - in den länglichen Hohlraum des Rahmendübels hineingesteckt und eingeschraubt. Bestimmungsgemäß liegt der Bund des Rahmendübels um die Bohrung herum an der vom Mauerwerk abgewandten Seite des Gegenstandes an und verhindert damit ein zu tiefes Einstecken des Rahmendübels in die Bohrung.

Als problematisch hat sich erwiesen, dass der Bund des Rahmendübels das Versenken des Schraubenkopfes unter die die vom Mauerwerk abgewandt liegende Oberfläche des zu befestigenden Gegenstandes behindert. Entweder die Bohrung in dem Gegenstand muss mit einer Ansenkung versehen werden - was zumeist einen separaten Arbeitsgang bedeutet, oder der Kopf der Schraube steht etwas über besagter Oberfläche vor. Auf einen Bund am Rahmendübel gänzlich zu verzichten ist auch keine gute Option, weil dann die Montage viel Konzentration und Gefühl erfordert, um den Rahmendübel nicht zu weit einzustecken.

Dementsprechend besteht die der Erfindung zu Grunde liegende Aufgabe darin, einen Rahmendübel derart mit einem Bund auszubilden, dass bei der Verwendung von Senkkopfschrauben deren Senkkopf problemlos unter die die vom Mauerwerk abgewandt liegende Oberfläche des zu befestigenden Gegenstandes versenkt werden kann, ohne dass die Bohrung in dem Gegenstand dazu angesenkt sein muss.

Zum Lösen der Aufgabe wird erfindungsgemäß vorgeschlagen die Wandstärke des Bundes des Rahmendübels, und die Wandstärke eines unmittelbar an den Bund anschließenden äußeren Längsbereichs des Hülsenabschnittes des Rahmendübels mit geringerer Wandstärke auszubilden als es die Wandstärke an den unmittelbar an den äußeren Längsbereich folgendem Längsbereich des Hülsenabschnittes ist.

Sofern der Rahmendübel im Übrigen entsprechend den Regeln dimensioniert ist, die in der Fachwelt für die Auslegung von Rahmendübeln aus thermoplastischem Kunststoff üblich sind, wird durch die erfindungsgemäße Auslegung ohne irgendwelche störenden Nebeneffekte erreicht, dass der Rahmendübel beim Einsetzen in die Bohrung am Gegenstand und am Mauerwerk durch den Bund sicher gegen zu tiefes Einsetzen gehalten wird, und dass dennoch bei Verwendung einer Senkkopfschraube der Schraubenkopf beim Einschrauben den Bund und den daran anschließenden Bereich des Hülsenabschnittes soweit umformt, dass der Schraubenkopf ohne Nachteile so unter die Oberfläche des Gegenstandes versenkt werden kann, als hätte der Rahmendübel keinen Bund.

Die Erfindung wird an Hand etwas stilisierter Zeichnungen veranschaulicht:
- Fig. 1:: zeigt einen beispielhaften erfindungsgemäßen Rahmendübel in seitlicher Teilschnittansicht.
- Fig. 2:: zeigt den Rahmendübel von Fig. 1 in Einbausituation vor dem Anbringen einer Schraube.
- Fig. 3:: zeigt einen Ausschnitt von Fig. 1 vergrößert.
- Fig. 4:: zeigt den Ausschnitt von Fig. 3 in eingebautem Zustand bei eingeschraubter Schraube.

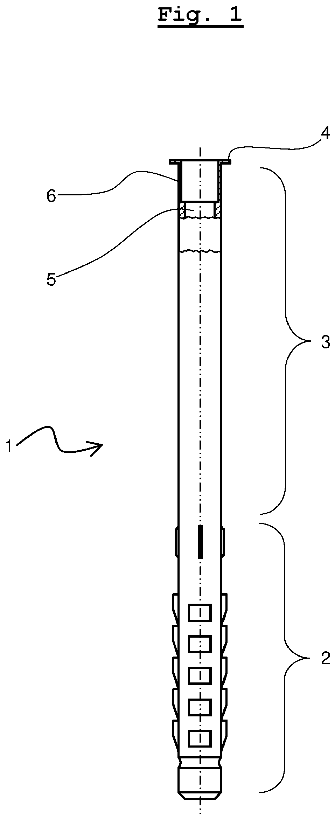

Wie in Fig. 1 gut erkennbar liegen entlang der Achse des Rahmendübels 1 ein Verankerungsabschnitt 2, ein Hülsenabschnitt 3 und ein Bund 4 hintereinander. Alle drei dieser Bereiche umschließen einen länglichen Hohlraum 5 in welchen bei bestimmungsgemäßer Anwendung eine Schraube einzuschrauben ist, welche nach dem Einschrauben vom Bund 4 bis in den Verankerungsabschnitt 2 ragt. Der an den Bund 4 unmittelbar anschließende Längsbereich 6 des Hülsenabschnittes 3 hat gegenüber dem weiter vom Bund 4 entfernt folgenden Bereich des Hülsenabschnittes 3 eine geringere Wandstärke.

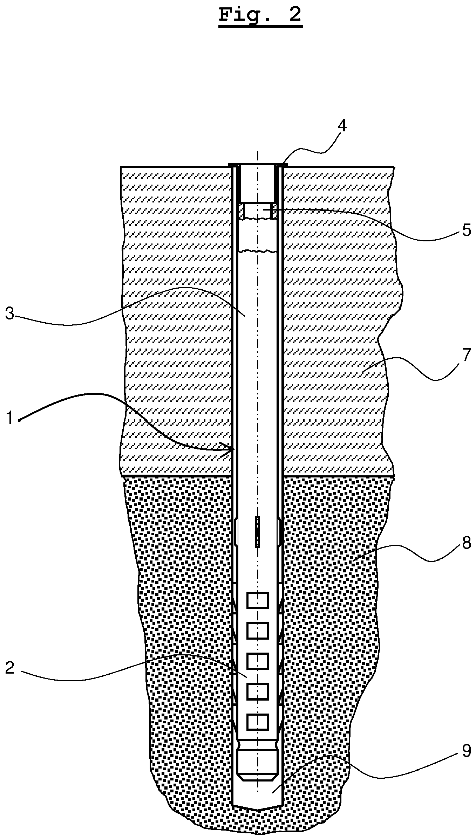

Fig. 2 zeigt die bestimmungsgemäße Anordnung Rahmendübels 1 zwecks Befestigung eines Gegenstandes 7 an einem Mauerwerk 8. Der Verankerungsabschnitt 2 und der Hülsenabschnitt 3 verlaufen dabei in einer Bohrung 9, welche sich durch den Gegenstand 7 hindurch in das Mauerwerk 8 hinein erstreckt. Der Verankerungsabschnitt 2 befindet sich dabei im mauerwerksseitigen Längsbereich der Bohrung 9, und der Hülsenabschnitt 3 verläuft zumindest überwiegend jenem Längsbereich der Bohrung 9, welche den Gegenstand 7 durchdringt. So lange - wie dargestellt - keine Schraube in den Hohlraum 5 eingeschraubt ist, liegt der Bund 4 an der vom Mauerwerk 8 abgewandten Seite an dem Gegenstand 7 um die Mündung der Bohrung 9 herum an, und verhindert dadurch, dass der Rahmendübel 1 übermäßig in die Bohrung 9 hinein geschoben werden kann.

Wie bei üblichen Dübeln aus Kunststoff auch wird eine feste Verbindung zwischen dem Gegenstand 7 und dem Mauerwerk 8 letztendlich hergestellt, indem in den Hohlraum 5 entlang der Achse des Rahmendübels 1 eine Schraube eingeschraubt wird, welche dann bis in den Verankerungsabschnitt 2 des Rahmendübels hinein ragt, und diesen radial auf spreizt, sodass der Verankerungsabschnitt 2 unter starkem Druck an der Mantelfläche der Bohrung 9 am Mauerwerk 8 anliegt.

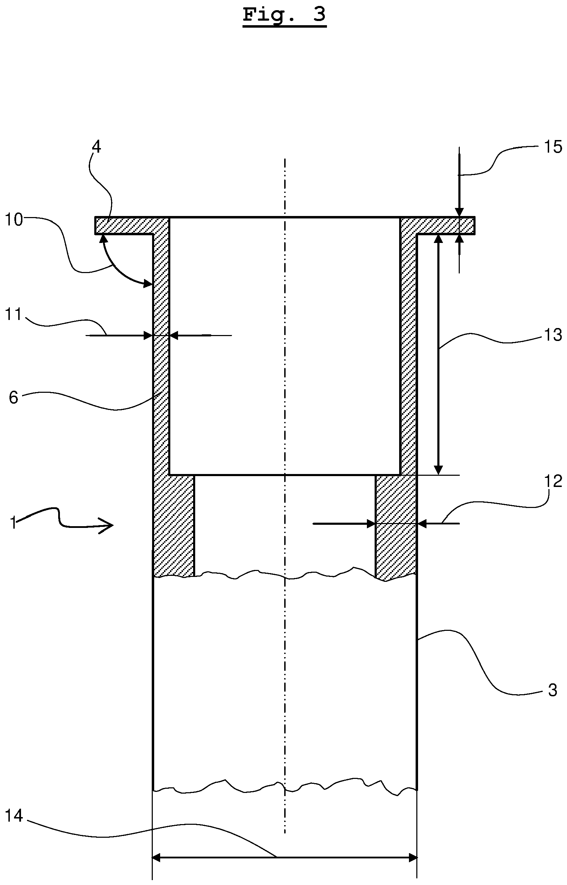

Fig. 3 zeigt den Mündungsbereich des Rahmendübels 1 (vor dem Anbringen einer Schraube) in gegenüber den anderen Zeichnungen vergrößertem Maßstab. Der Winkel 10 zwischen der dem Hülsenabschnitt 3 zugewandte Fläche des Bundes 4 und der Außenmantelfläche des Hülsenabschnittes 3 beträgt bei der dargestellten vorteilhaften Ausführung 90°, ist also ein rechter Winkel. Er dürfte ohne Nachteil auch weniger als 90° betragen, also ein spitzer Winkel sein. Wenn der Winkel 10 größer als 90° wäre, also ein stumpfer Winkel wäre, wäre das nachteilig, da dann bei ungeschickter Handhabung der Rahmendübel 1 versehentlich zu weit in die Bohrung 8 am Mauerwerk hineingesteckt werden könnte.

Die Wandstärke 11 des Hülsenabschnittes 3 ist in einem Längsbereich 6, welcher an den Bund 4 anschließt, gegenüber der Wandstärke 12 im anschließenden Längsbereich des Hülsenabschnittes 3 verringert. Die Länge 13 des Längsbereiches 6 in Achsrichtung des Rahmendübels 1 sollte idealerweise mindestens etwa soviel betragen, wie die Hälfte des Außendurchmessers 14 des Hülsenabschnittes 3 beträgt; sie kann ohne Nachteile für die Funktion aber auch mehr betragen als der Außendurchmesser 14 des Hülsenabschnittes 3. Eine Begrenzung der Länge 13 nach oben hin ist in erster Linie durch das Spritzgussverfahren zur Herstellung des Rahmendübels 1 gegeben. Mit steigender Länge 13 wird es nämlich beim Kunststoffspritzguss zunehmend schwieriger die enge lange Formkavität zu füllen.

Auch die Wandstärke 15 des Bundes 4 ist dünner ausgebildet, als es die Wandstärke 12 des Hülsenabschnittes 3 in dem Bereich ist, der auf der vom Bund 4 abgewandt liegenden Seite des Längsbereichs 6 des Hülsenabschnittes 3 folgt.

Für eine typische beispielhafte Dimensionierung eines Rahmendübels 1 zur Befestigung eines Holzbalkens an einem Mauerwerk 8 können einzelne Abmessungen wie folgt betragen:

| | |
|---|---|
| Außendurchmesser des Hülsenabschnittes 3: | 10 mm |
| Wandstärke 11 des Hülsenabschnittes 3 im Längsbereich 6: | 0,4 mm |
| Wandstärke 15 des Bundes 4: | 0,4 mm |
| Länge 13 des Längsbereichs 6: | 10,4 mm |

Der erfindungsgemäß erwünschte Effekt tritt ohne Nachteile gut ein, wenn die Wandstärken 11 des Hülsenabschnittes 3 im Längsbereich 6 und die Wandstärke 15 des Bundes 4 nicht größer sind als die Hälfte der Wandstärke 12 in jenem Längsbereich des Hülsenabschnittes 3, welcher auf den Längsbereich 6 mit der verringerten Wandstärke 11 folgt.

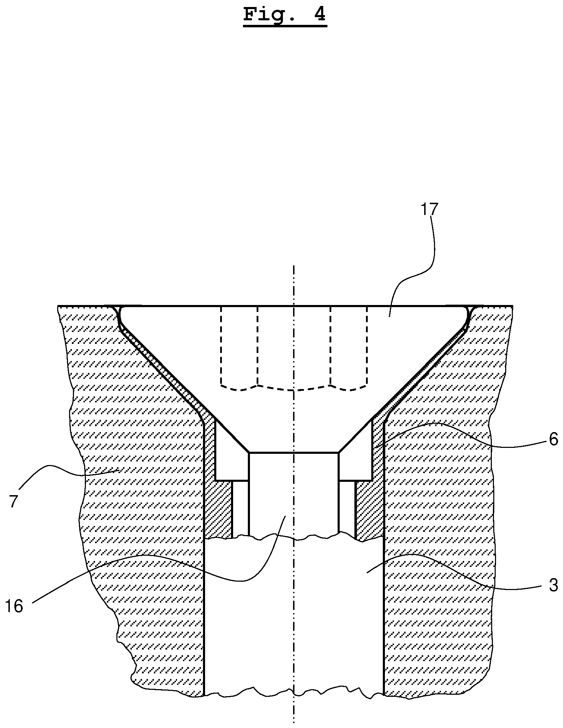

Fig. 4 veranschaulicht die erfindungsgemäß beabsichtigte und erreichte Situation am Mündungsbereich des Rahmendübels 1 nach dem Einschrauben einer Senkkopfschraube 16 in den Rahmendübel 1 nachdem dieser wie in Fig. 3 gezeigt in der Bohrung 9 durch den Gegenstand 7 und in das Mauerwerk 8 platziert ist, wobei der befestigte Gegenstand 7 aus Holz besteht.

Wenn der Durchmesser des Senkkopfs 17 der Senkkopfschraube 16 größer oder gleich dem Doppelten der größten radialen Abmessung des Bundes 4 bezüglich der Achse des Rahmendübels 1 ist, kann die Senkkopfschraube 16 so weit eingeschraubt werden, dass der Senckopf 17 so weit in den Gegenstand 7 hinein gedrückt wird, dass seine verbleibende Sichtfläche bündig mit der Sichtfläche des Gegenstandes 7 zu liegen kommt, und dass kein Abschnitt des Bundes über die Sichtfläche des Gegenstandes 7 empor ragt, ohne dass dazu vorher die Bohrung 9 im Gegenstand 7 angesenkt werden muss und ohne dass irgend ein beteiligter Teil versagt. Der vorherige Bund 4 und ein Teil des an diesen anschließenden Längsbereichs 6 des Hülsenabschnittes 3 des Rahmendübels 1 werden dabei plastisch etwa zu einem Trichter umgeformt und zwischen dem Senkkopf 17 und dem Gegenstand 7 eingeklemmt.

Es sei noch zu erwähnen, dass der Bund 4 typischerweise die Form eines Ringes mit kreisrunder Außenmantelfläche hat, welche koaxial zur Längsachse des Rahmendübels und der in diesem anzubringenden Schraube liegt. Im Rahmen des Erfindungsgedankens sind aber auch andere Formen und Anordnungen des Bundes 4 möglich. beispielsweise kann der Bund sternförmig vieleckig sein, oder auch nur an einer Seite oder nur an zwei einander gegenüberliegenden Seiten radial vom Hülsenabschnitt (3) abstehen. Derartige Sonderformen können unter Umständen leichter herstellbar sein als die kreissymmetrische Form.

## Patentansprüche

1. Rahmendübel (1), welcher bestimmungsgemäß zur Befestigung eines Gegenstandes (7) an einem Mauerwerk (8) vorgesehen ist, und welcher beim bestimmungsgemäßen Einsatz mit einem Längsbereich den Gegenstand (7) durchdringt, wobei der Rahmendübel aus thermoplastischem Kunststoff besteht, und auf einer Achse hintereinander liegend einen Verankerungsabschnitt (2), einen Hülsenabschnitt (3) und einen Bund (4) aufweist, welche gemeinsam einen länglichen Hohlraum (5) umfassen, wobei der Bund (4) an dem vom Verankerungsabschnitt (2) abgewandten Ende an den Hülsenabschnitt (3) anschließt und gegenüber diesem bezüglich der gemeinsamen Achse einen größeren Außendurchmesser aufweist,
**dadurch gekennzeichnet, dass**
sowohl der Bund (4) als auch ein unmittelbar an den Bund (4) angrenzender Längsbereich (6) des Hülsenabschnittes (3) eine Wandstärke (15, 11) aufweisen, welche geringer ist als die Wandstärke (12) an jenem Längsbereich des Hülsenabschnittes (3), welcher an den Längsbereich (6) vom Bund (4) abgewandt folgt.

2. Rahmendübel (1) nach Anspruch 1, **dadurch gekennzeichnet, dass** die Länge (13) des Längsbereichs (6) mindestens halb so groß ist, wie der halbe Außendurchmesser (14) des Hülsenabschnittes (3), und dass sowohl die Wandstärke (11) am Längsbereich (6) des Hülsenabschnitts (3) als auch die Wandstärke (15) am Bund (4) kleiner sind oder gleich groß sind wie es die Hälfte der Wandstärke (12) des Hülsenabschnittes (3) in dem an den Längsbereich (6) folgenden Längsbereich ist.

3. Rahmendübel (1) nach Anspruch 1 oder 2, **dadurch gekennzeichnet, dass** die Länge (13) des Längsbereichs (6) 0,8 mal bis 2 mal so viel beträgt wie der Außendurchmesser (14) des Hülsenabschnittes (3).

4. Rahmendübel (1) nach einem der Ansprüche 1 bis 3, **dadurch gekennzeichnet, dass** der Winkel (10) zwischen der dem Hülsenabschnitt (3) zugewandten Fläche des Bundes (4) und der Außenmantelfläche des Hülsenabschnittes (3) ein rechter Winkel oder ein spitzer Winkel ist.
